# FASCICULE DE BREVET EUROPEEN

(11) **EP 0 652 097 B1**
(45) Date de publication et mention de la délivrance du brevet: **10.09.1997**
(21) Numéro de dépôt: 94490051.3
(22) Date de dépôt: 27.10.1994
(51) Int. Cl.: B29C 47/58, B29C 47/06

(54) **Dispositif de réunion d'au moins deux flux dans une machine de coextrusion laminaire**
Vorrichtung zur Vereinigung von mindestens zwei Materialströmen in einer Koextrusionslaminierungsmaschine
Apparatus for combining at least two material streams in a coextrusion-laminating machine

(30) Priorité: 09.11.1993 FR 9313598
(43) Date de publication de la demande: 10.05.1995
(73) Titulaire: EXTRUSION DE BASSE NORMANDIE-EXBANOR, S.A., F-14100 Lisieux (FR); Velluire, Maurice, F-14430 Dozule (FR)
(72) Inventeur: Velluire, Maurice, F-14430 Dozule (FR)
(74) Mandataire: Ecrepont, Robert

(56) Documents cités:
- DE-A- 2 921 943
- DE-A- 3 405 744
- FR-A- 92 986
- FR-A- 2 320 174
- US-A- 2 985 556
- US-A- 3 432 588
- US-A- 3 734 662
- US-A- 5 137 675
- PATENT ABSTRACTS OF JAPAN vol. 13, no. 52 (M-794) 7 Février 1989 & JP-A-63 256 418 (TORAY IND. INC.) 24 Octobre 1988

## Description

L'invention se rapporte à un dispositif de réunion d'au moins deux flux de matière dans une machine de coextrusion laminaire.

Pour transformer la matière plastique brute en une plaque qui pourra être ouvrée ensuite, on fait appel à des machines d'extrusion.

Les matières plastiques connues à ce jour ont des caractéristiques qui leur sont spécifiques.

Aussi, il n'existe pas une seule matière plastique qui réunisse toutes les caractéristiques souhaitées pour un usage particulier.

Par exemple, certains matériaux ont une bonne résistance mécanique tandis que d'autres sont résistants aux agents extérieurs, tels les rayons ultra-violets et d'autres encore sont particulièrement adaptés pour travailler en haute ou basse température.

Pour obtenir un objet ayant les caractéristiques souhaitées, il est connu de réaliser des produits multicouches à l'aide d'un procédé dit de coextrusion.

Il existe deux types de coextrusion, l'un dit "manifold" qui consiste à utiliser pour chaque matériau une extrudeuse et autant de têtes d'extrusion que de couches à constituer.

Ces têtes convergent alors vers une filère de sortie où les couches se regroupent.

Avec ce type de coextrusion, chaque matière est traitée séparément tout au long de son parcours ce qui permet d'utiliser des matières extrêmement différentes avec des températures de fusion trés éloignées mais la mise en oeuvre est trés complexe et le matériel trés coûteux.

L'autre procédé de coextrusion qui est celui auquel se rapporte l'invention, est le procédé dit de coextrusion laminaire.

Dans ce procédé, la réunion des couches se fait dans un canal situé en amont d'une unique tête d'extrusion dans un outil dit boîte d'extrusion.

Pour cela, les différentes couches doivent se déplacer à une même vitesse et d'une manière continue pour éviter tout cisaillement.

Il faut donc obtenir un écoulement laminaire de chaque couche.

Pour obtenir et maintenir cet écoulement laminaire, il faut réduire les causes de perturbations à savoir principalement les pertes de charges qu'engendrent les modifications de section des canaux de transport des flux et de leurs directions.

Un tel ensemble de coextrusion laminaire comprend :
- au moins deux extrudeuses et, plus précisément, autant d'extrudeuses que de couches de matériaux différents à réunir,
- en aval des extrudeuses, un dispositif de réunion des différents flux provenant des extrudeuses en un flux dit global, ce dispositif étant encore appelé boîte de répartition et
- en aval de ce dispositif de réunion, une tête d'extrusion alimentée par le flux global.

Ce dispositif de réunion consiste essentiellement en un canal principal dans lequel débouche, pour chaque flux de matière, un canal dit d'alimentation reliant chaque extrémité au dit canal principal.

Dans les premiers systèmes de coextrusion, le flux d'une première matière visqueuse se présentait dans cette boîte d'extrusion sous forme d'un jonc cylindrique qui constituait l'âme du produit et les autres flux respectaient la section circulaire du flux jusqu'à sa sortie où l'ensemble des flux était alors transformé en une nappe plane à l'aide d'un moyen de transformation géométrique.

Ce moyen de transformation géométrique consistait essentiellement en un canal dit de transformation géométrique de section rectangulaire qui était perpendiculaire à l'axe de déplacement du jonc en aval du canal principal et dont la section de ce canal de transformation géométrique était croissante selon au moins une des deux dimensions de sa section et, selon le sens de déplacement du flux, jusqu'à obtention de la section désirée.

Cette transformation géométrique en sortie n'est pas facile à réaliser compte tenu qu'on a un produit multi-composants avec des viscosités et propriétés différentes.

Il était donc difficile de respecter les différentes tolérances de chaque couche.

Pour pallier aux problèmes de la transformation géométrique d'un jonc multi-couches, il est connu de préformer chaque couche avant qu'elles se rejoignent et, à cet effet, le moyen de transformation géométrique précité est placé sur le parcours de chaque flux d'extrudeuse et, en amont du point de regroupement des dits flux (US-A-5.137.675).

Les dispositifs d'extrusion deviennent alors extrêmement compliqués lorsqu'il est nécessaire de multiplier les extrudeuses avec une multiplicité de pièces agencées pour pouvoir être démontées pour le nettoyage.

Les dispositifs sont encore plus compliqués lorsque chaque canal d'alimentation du dispositif de réunion comporte des moyens de réglage du débit.

On connaît, par exemple, une machine de coextrusion US-A-3.432.588 selon laquelle, pour transformer un jonc de matière en une nappe plane, on fait appel à un cylindre qui, fermé aux deux extrémités, communique avec le canal commun par une fente parallèle à une génératrice de l'enveloppe cylindrique.

Le flux de matière provenant de l'extrudeuse pénètre par l'une des extrémités du cylindre.

C'est seulement lorsque le cylindre est rempli que la matière peut s'échapper par la fente.

Dans les solutions connues, les moyens de réglage du débit consistent essentiellement en une barre de restriction qui est placée transversalement au flux pour modifier la section de passage du canal d'alimentation.

Ces moyens de réglage sont, à ce jour, placés à une distance non négligeable du plan de jonction du canal d'alimentation de l'extrudeuse considérée avec le canal de regroupement des flux.

En raison de cette situation et des moyens utilisés, on ne peut augmenter le nombre de couches et les solutions connues se limitent généralement à une couche centrale et une couche de chaque coté.

En outre, si l'axe de l'extrudeuse du jonc principal est dans l'axe de l'extrusion, c'est à dire horizontal, il n'est pas de même des autres extrudeuses dont l'alimentation est verticale ce qui augmente les longueurs des canaux et le nombre de changements de direction ce qui accentue notablement les pertes de charges.

Un des résultats que l'invention vise à obtenir est un ensemble de coextrusion laminaire qui remédie aux problèmes exposés ci-dessus et notamment qui facilite les montages et démontages des pièces essentielles, par exemple, pour un échange ou un entretien.

A cet effet, l'invention a pour objet un tel ensemble de coextrusion tel que décrit dans la revendication 1 comprenant :
- au moins deux extrudeuses,
- un dispositif de réunion des flux provenant des extrudeuses en un flux global et,
- une tête d'extrusion alimentée par le flux global,
dont le dispositif de réunion comprend un canal principal dans lequel débouche des canaux dits d'alimentation acheminant les différents flux de matière provenant des extrudeuses, les dits canaux d'alimentation étant pourvus de moyens de restriction de la section de passage du flux,

cet ensemble étant notamment caractérisé en ce que le canal d'alimentation reliant chaque extrudeuse au canal principal est réalisé au moins partiellement dans un robinet à boisseau cylindrique, lequel robinet comprend des moyens de transformation d'un jonc cylindrique en une nappe plane.

L'invention sera bien comprise à l'aide de la description ci-aprés faite à titre d'exemple non limitatif en regard du dessin ci-annexé qui représente schématiquement :

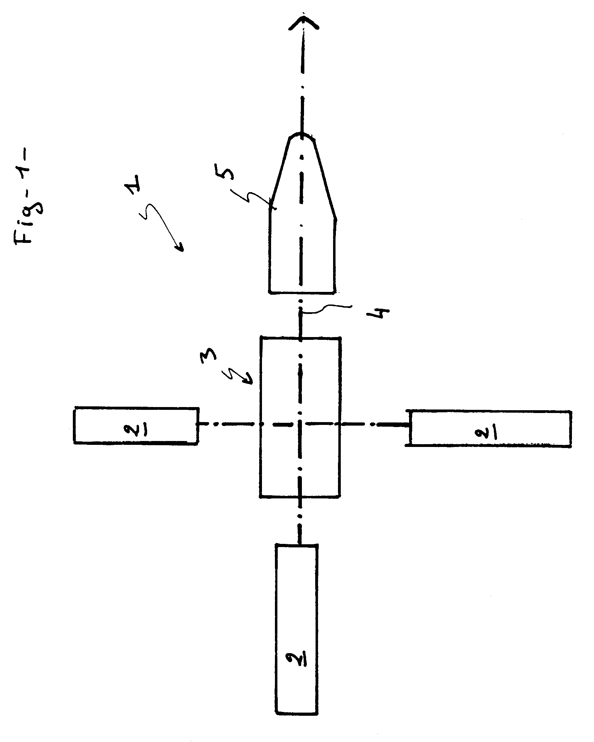

- figure 1 : une installation de coextrusion,

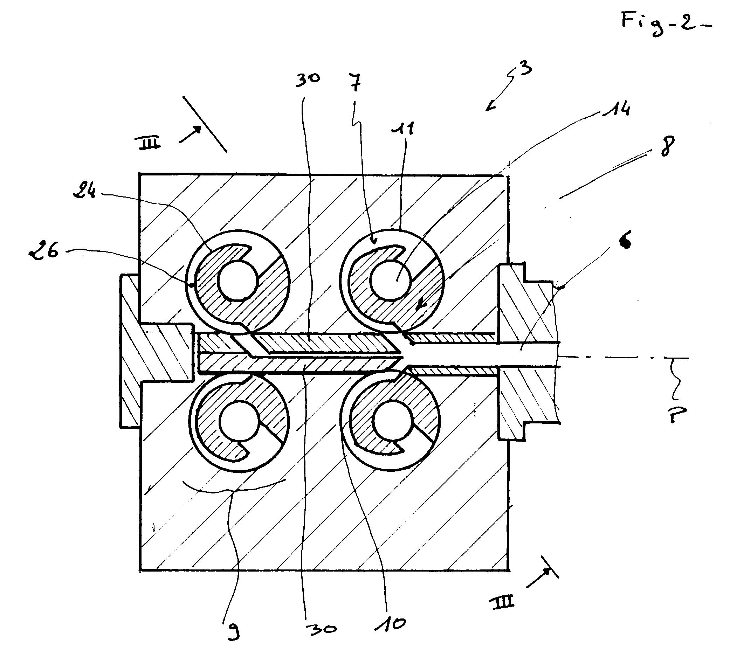

- figure 2 : vue en coupe, une boîte de réunion des flux,

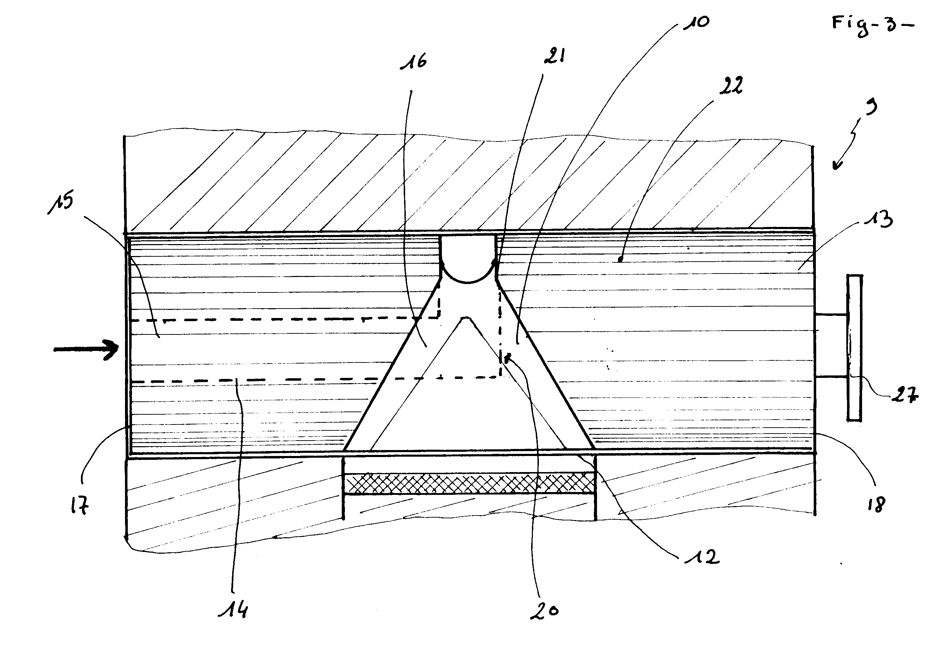

- figure 3 : une vue selon III-III de la figure 2.

En se reportant au dessin, on voit que, pour constituer une plaque (non représentée) obtenue par superposition de couches de matières plastiques, on fait appel à un ensemble 1 de coextrusion comprenant :
- au moins deux extrudeuses 2, plus précisément autant d'extrudeuses 2 que de couches de différents matériaux utilisés,
- un dispositif 3 de réunion des flux provenant des extrudeuses 2 en un flux 4 dit global, ce dispositif 3 étant encore appelé boîte de répartition et,
- une tête 5 d'extrusion alimentée par le flux global.

Le dispositif 3 de réunion comprend un canal principal 6 dans lequel débouchent des canaux annexes 7 dits d'alimentation acheminant les différents flux de matière provenant des extrudeuses, les dits canaux 7 étant pourvus de moyens 8 de restriction de la section de passage du flux.

La section du canal principal est, par exemple, rectangulaire et l'axe longitudinal du canal principal est horizontal.

Selon l'invention, le canal 7 d'alimentation reliant chaque extrudeuse au canal principal 6 est réalisé au moins partiellement dans un robinet 9 à boisseau cylindrique, lequel robinet 9 comprend des moyens 1O de transformation d'un jonc cylindrique en une nappe plane.

Selon l'invention, le robinet 9 à boisseau cylindrique comprend :
- un corps présentant un alésage cylindrique 11 qui, sensiblement tangent au plan P de déplacement du flux dans le canal principal 6 communique avec ce canal principal 6 par une fente 12 parallèle à l'axe longitudinal de l'alésage,
- un boisseau 13 cylindrique qui se loge dans l'alésage 11 et qui comprend lui-même :
   . un canal axial 14 dont l'une 15 des extrémités 15, 16 débouche dans l'une 17 des faces opposées 17, 18 du boisseau 13 et à laquelle extrémité 15 se raccorde au moins indirectement l'extrudeuse et dont l'autre extrémité 16 communique avec l'une 2O des extrémités 2O, 21 d'un canal sensiblement radial qui débouche par son autre extrémité 21 dans la face externe 22 du boisseau 13 au niveau de laquelle cette face externe du boisseau présente sur une fraction de sa périphérie une dépouille 24 qui, vue en développé, a une forme d'éventail dont l'axe de symétrie est dans un plan perpendiculaire à l'axe de rotation du boisseau 13 de sorte que le fond de cette dépouille et la paroi de l'alésage réalisent un canal 26 dit intermédiaire reliant le canal axial à la fente de l'alésage.

Les formes de cette dépouille sont déterminées pour transformer un jonc de section circulaire en une nappe plane.

Cette forme de dépouille est encore dit forme en queue de carpe.

Cette disposition en robinet à boisseau est trés avantageuse car elle permet un démontage trés facile puisqu'il suffit de retirer le boisseau selon son axe de rotation.

L'extrémité terminale de la dépouille 24 est conformée pour orienter le flux s'écoulant entre le fond de la dépouille 24 et la face interne de l'alésage vers la fente réalisée entre l'alésage et le canal principal.

La paroi externe du boisseau 13 située au delà du bord terminal de la dépouille 24 constitue, pour la fente reliant l'alésage et le canal principal, un moyen de réglage de la section de passage de cette fente selon la position de ce bord terminal par rapport à la fente.

Par exemple, lorsque le bord terminal est situé dans un plan médian à la fente précitée, la section de passage du flux est réduite de moitié.

Ainsi, le moyen de transformation géométrique, le moyen de restriction de la section de passage et la majeure partie du canal d'alimentation reliant l'extrudeuse au canal principal sont combinés sur une unique pièce qui est interchangeable aisément.

Par rotation du boisseau, on peut faire varier la section de passage du flux de l'extrudeuse et, pour cela, la face 18 du boisseau opposée à celle 17 dans laquelle se présente l'orifice d'entrée du canal axial 14 est pourvue d'un moyen de préhension 27.

Un autre avantage de cette disposition est une réduction du trajet qui est trés court entre l'extrudeuse et le canal principal.

L'angle défini par les deux côtés de la dépouille, la longueur mesurée entre l'intersection de ces deux côtés et le bord terminal de cette dépouille déterminent notamment la largeur de la nappe en sortie du robinet.

Ce dispositif de réunion est trés compact, ce qui permet d'augmenter le nombre d'extrudeuses sans augmenter les pertes de chaleur et les pertes de charges.

L'alimentation des boisseaux se fait latéralement.

On peut prévoir des pièces de liaison portant des canaux de liaison de l'extrudeuse au boisseau.

La fente de l'alésage communique avec le canal principal par un court canal de liaison formé dans l'épaisseur de l'enveloppe du canal principal.

Pour régler l'épaisseur et la largeur du canal principal, il est prévu que les parois du dit canal sont constituées par des cassettes 30 interchangeables, lesquelles cassettes constituent soit l'enveloppe inférieure du canal principal, soit l'enveloppe supérieure de ce canal et sont associées l'une à l'autre selon un plan de joint, lequel est de préférence coplanaire au plan médian horizontal du canal principal.

## Revendications

1. Dispositif de réunion d'au moins deux flux de matière utilisé dans une machine de coextrusion laminaire comprenant elle-même :
- au moins deux extrudeuses (2), plus précisément autant d'extrudeuses (2) que de couches de différents matériaux utilisés,
- un dispositif (3) de réunion des flux provenant des extrudeuses (2) en un flux (4) dit global, ce dispositif (3) étant encore appelé boîte de répartition,
- une tête (5) d'extrusion alimentée par le flux global, et
- des moyens (10) de transformation d'un jonc cylindrique en une nappe plane,
ce dispositif de réunion comprenant un canal principal (6) dans lequel débouchent des canaux annexes (7) dits d'alimentation acheminant les différents flux de matière provenant des extrudeuses, les dits canaux (7) étant pourvus de moyens (8) de restriction de la section de passage du flux,
ce dispositif étant **CARACTERISE** en ce que le canal (7) d'alimentation reliant chaque extrudeuse au canal principal (6) est réalisé au moins partiellement dans un robinet (9) à boisseau cylindrique, lequel robinet (9) comprend les moyens (10) de transformation d'un jonc cylindrique en une nappe plane.

2. Dispositif selon la revendication 1 **caractérisé** en ce que le robinet (9) à boisseau cylindrique comprend :
- un corps présentant un alésage cylindrique (11) qui, sensiblement tangent au plan (P) de déplacement du flux dans le canal principal (6) communique avec ce canal principal (6) par une fente (12) parallèle à l'axe longitudinal de l'alésage,
- un boisseau (13) cylindrique qui se loge dans l'alésage (11) et qui comprend lui-même :
. un canal axial (14) dont l'une (15) des extrémités (15, 16) débouche dans l'une (17) des faces opposées (17, 18) du boisseau (13) et à laquelle extrémité (15) se raccorde au moins indirectement l'extrudeuse et dont l'autre extrémité (16) communique avec l'une (2O) des extrémités (2O, 21) d'un canal sensiblement radial qui débouche par son autre extrémité (21) dans la face externe (22) du boisseau (13) au niveau de laquelle cette face externe du boisseau présente sur une fraction de sa périphérie une dépouille (24) qui, vue en développé, a une forme d'éventail dont l'axe de symétrie est dans un plan perpendiculaire à l'axe de rotation du boisseau (13) de sorte que le fond de cette dépouille et la paroi de l'alésage réalisent un canal (26) dit intermédiaire reliant le canal axial à la fente de l'alésage.

3. Dispositif selon la revendication 2 **caractérisé** en ce que les formes de cette dépouille sont déterminées pour transformer un jonc de section circulaire en une nappe plane.

4. Dispositif selon la revendication 2 **caractérisé** en ce que :
- l'extrémité terminale de la dépouille (24) est conformée pour orienter le flux s'écoulant entre le fond de la dépouille (24) et la face interne de l'alésage vers la fente réalisée entre l'alésage et le canal principal, et
- la paroi externe du boisseau (13) située au delà du bord terminal de la dépouille (24) constitue, pour la fente reliant l'alésage et le canal principal, un moyen de réglage de la section de passage de cette fente selon la position de ce bord terminal par rapport à la fente.

5. Dispositif selon la revendication 1 ou 2 **caractérisé** en ce que l'alimentation des boisseaux se fait latéralement.

6. Dispositif selon la revendication 2 **caractérisé** en ce que la fente de l'alésage communique avec le canal principal par un court canal de liaison formé dans l'épaisseur de l'enveloppe du canal principal.

7. Dispositif selon la revendication 6 **caractérisé** en ce que l'épaisseur et la largeur du canal principal sont constituées par des cassettes (30) interchangeables.

8. Dispositif selon la revendication 7 **caractérisé** en ce que les cassettes interchangeables sont associées l'une à l'autre selon un plan de joint pour former une enveloppe supérieure et inférieure, lequel plan de joint est coplanaire au plan médian horizontal du canal principal.

## Claims

1. A device for combining at least two streams of material in a co-extrusion laminating machine, itself comprising:
- at least two extruders (2), more precisely as many extruders (2) as layers of different materials used,
- a device (3) for combining the streams issuing from the extruders (2) to form an aggregate stream (4), the device (3) also being referred to as a distributing box,
- an extrusion head (5) fed by the aggregate stream, and
- means (10) for converting a cylindrical rod into a flat sheet,
the combining device comprising a main channel (6) supplied by subsidiary feed channels (7) conveying the different streams of material issuing from the extruders, the said channels (7) being provided with means (8) for limiting the cross-section of flow of the stream,
the device being characterised in that the feed channel (7) connecting each extruder to the main channel (6) is at least partially arranged in a valve (9) having a cylindrical plug, the valve (9) comprising the means (10) for converting a cylindrical rod into a flat sheet.

2. A device according to claim 1, characterised in that the valve (9) having a cylindrical plug comprises:
- a body having a cylindrical bore (11) communicating with the main channel (6), substantially tangentially to the plane (P) of displacement of the stream in the main channel (6), by means of a slot (12) parallel to the longitudinal axis of the bore,
- a cylindrical plug (13) provided in the bore (11) and itself comprising:
• an axial channel (14), one (15) of the ends (15, 16) of which opens into one (17) of the opposing ends (17, 18) of the plug (13), the extruder being connected at least indirectly to the end (15) and the other end (16) communicating with one (20) of the ends (20, 21) of a substantially radial channel, the other end (21) of which opens into the outer surface (22) of the plug (13), at which point the outer surface of the plug has, over a portion of its periphery, a relief (24) which, when seen in outline, has the shape of a fan, the axis of symmetry of which is in a plane perpendicular to the axis of rotation of the plug (13) so that the base of the relief and the wall of the bore form an intermediate channel (26) connecting the axial channel to the slot of the bore.

3. A device according to claim 2, characterised in that the shapes of the relief are selected in order to convert a rod of circular section into a flat sheet.

4. A device according to claim 2, characterised in that:
- the terminal end of the relief (24) is shaped so as to direct the stream flowing between the base of the relief (24) and the inner surface of the bore towards the slot formed between the bore and the main channel, and
- the outer wall of the plug (13), located beyond the terminal edge of the relief (24), constitutes, for the slot connecting the bore and the main channel, a means of regulating the cross-section of flow in this slot according to the position of the terminal edge relative to the slot.

5. A device according to claim 1 or 2, characterised in that the plugs are supplied laterally.

6. A device according to claim 2, characterised in that the slot of the bore communicates with the main channel by means of a short linking channel formed in the thickness of the casing of the main channel.

7. A device according to claim 6, characterised in that the thickness and the width of the main channel are determined by interchangeable cartridges (30).

8. A device according to claim 7, characterised in that the interchangeable cartridges are interconnected in a joining plane to form an upper and a lower casing, the joining plane being co-planar with the horizontal median plane of the main channel.

## Patentansprüche

1. Vorrichtung zur Vereinigung von mindestens zwei Materialströmen zum Einsatz in einer Koextrusionslaminiermaschine, welche ihrerseits folgendes aufweist:
- mindestens zwei Strangpressen (2), genauer gesagt ebenso viele Strangpressen (2) wie Schichten aus verschiedenen eingesetzten Werkstoffen vorgesehen sind,
- eine Vorrichtung (3) zur Vereinigung der von den Strangpressen (2) kommenden Materialströme zu einem sogenannten Gesamtstrom, wobei diese Vorrichtung (3) auch als Verteilerbehälter bezeichnet wird,
- einen Extrudierkopf (5), dem der Gesamtstrom zugeführt wird, und
- Einrichtungen (10) zum Umformen des Materials aus einer zylinderförmigen Materialstange zu einer flachen Schicht,
wobei diese Vorrichtung zur Vereinigung einen Hauptkanal (6) aufweist, in welchen Nebenkanäle (7), sogenannte Zuführkanäle, einmünden, welche die verschiedenen, von den Strangpressen kommenden Materialströme führen, wobei die Kanäle (7) mit Einrichtungen (8) zur Verminderung des Stromdurchtrittsquerschnitts ausgerüstet sind,
**dadurch GEKENNZEICHNET**, daß der Zuführkanal (7), der jede Strangpresse mit dem Hauptkanal (6) verbindet, zumindest teilweise in einem Leitungsventil (9) mit zylinderförmigem Hahnkegel ausgebildet ist, wobei das Leitungsventil (9) die Einrichtungen (10) zum Umformen des Materials aus einer zylinderförmigen Materialstange zu einer flachen Schicht umfaßt.

2. Vorrichtung nach Anspruch 1, dadurch **gekennzeichnet**, daß das Leitungsventil (9) mit zylinderförmigem Hahnkegel folgendes aufweist:
- einen Korpus mit einer zylindrischen Bohrung (11), die im wesentlichen tangential zur Ebene (P), in der sich der Materialstrom im Hauptkanal (6) verschiebt, mit diesem Hauptkanal (6) über einen Schlitz (12) in Verbindung steht, der parallel zur Längsachse der Bohrung verläuft,
- ein zylinderförmiges Leitungsventil (13), das sich in der Bohrung (11) befindet und seinerseits folgendes aufweist:
• einen axialen Kanal (14) mit zwei Enden (15, 16), von denen das eine (15) in eine (17) der gegenüberliegenden Flächen (17, 18) des Leitungsventils (13) einmündet und an welches sich zumindest indirekt die Strangpresse anschließt, und von denen das andere (16) mit einem (20) der Enden (20, 21) eines im wesentlichen radial verlaufenden Kanals in Verbindung steht, welcher mit seinem anderen Ende (21) in der Außenseite (22) des Leitungsventils (13) mündet, in deren Höhe diese Außenseite des Leitungsventils auf einem Teil ihres Umfangs eine Schrägung (24) aufweist, die in Richtung der Evolute eine Fächerform besitzt, deren Symmetrieachse sich in einer zur Drehachse des Leitungsventils (13) senkrechten Ebene befindet, so daß der Boden dieser Abschrägung und die Wandung der Bohrung einen als Zwischenkanal bezeichneten Kanal (26) bilden, welcher den axialen Kanal mit dem Bohrungsschlitz verbindet.

3. Vorrichtung nach Anspruch 2, **dadurch gekennzeichnet**, daß die Formen dieser Abschrägung so bestimmt sind, daß ein Materialstrang mit kreisförmigem Querschnitt zu einer flachen Schicht umgeformt wird.

4. Vorrichtung nach Anspruch 2, **dadurch gekennzeichnet**, daß
- das Abschlußende der Abschrägung (24) so geformt ist, daß der zwischen dem Boden der Abschrägung (24) und der Innenfläche der Bohrung fließende Materialstrom zu dem zwischen der Bohrung und dem Hauptkanal ausgebildeten Schlitz geleitet wird, und
- die Außenwandung des Leitungsventils (13), die sich jenseits der Abschlußkante der Abschrägung (24) befindet, für den die Bohrung mit dem Hauptkanal verbindenden Schlitz eine Einrichtung zum Einstellen des Durchtrittsquerschnitts dieses Schlitzes je nach Stellung dieser Abschlußkante bezüglich des Schlitzes bildet.

5. Vorrichtung nach Anspruch 1 oder 2, **dadurch gekennzeichnet**, daß die Zuführung zu den Leitungsventilen seitlich erfolgt.

6. Vorrichtung nach Anspruch 2, **dadurch gekennzeichnet**, daß der Schlitz der Bohrung mit dem Hauptkanal über einen kurzen Verbindungskanal in Strömungsverbindung steht, der in der Dicke der Ummantelung des Hauptkanals ausgebildet ist.

7. Vorrichtung nach Anspruch 6, **dadurch gekennzeichnet**, daß die Dicke und die Breite des Hauptkanals aus austauschbaren Kassetten (30) gebildet sind.

8. Vorrichtung nach Anspruch 7, **dadurch gekennzeichnet**, daß die austauschbaren Kassetten entlang einer Verbindungsebene unter Bildung einer oberen und unteren Ummantelung miteinander verbunden sind, wobei diese Verbindungsebene koplanar zur horizontalen Mittelebene des Hauptkanals verläuft.
